# EUROPÄISCHE PATENTSCHRIFT

(11) **EP 1 498 461 B1**
(45) Veröffentlichungstag und Bekanntmachung des Hinweises auf die Patenterteilung: **25.06.2008**
(21) Anmeldenummer: 04102280.7
(22) Anmeldetag: 25.05.2004
(51) Int. Cl.: C09D 167/00, C09D 175/06, C08G 18/40, C08G 18/80

(54) **Lösungsmittelhaltige Beschichtungszusammensetzungen**
Solvent containing coating compositions
Compositions de revêtement contenant un solvant

(30) Priorität: 18.07.2003 DE 10332723
(43) Veröffentlichungstag der Anmeldung: 19.01.2005
(73) Patentinhaber: Evonik Degussa GmbH, 40474 Düsseldorf (DE)
(72) Erfinder: Stapperfenne, Uwe, 42489, Wülfrath (DE); Franzmann, Giselher, 58453, Witten (DE); Faber, Doris, 46286, Dorsten (DE)

(56) Entgegenhaltungen:
- EP-A- 0 145 006
- PATENT ABSTRACTS OF JAPAN Bd. 2000, Nr. 04, 31. August 2000 (2000-08-31) & JP 2000 007984 A (KANSAI PAINT CO LTD), 11. Januar 2000 (2000-01-11)

## Beschreibung

Die Erfindung betrifft lösungsmittelhaltige Beschichtungszusammensetzungen bestehend aus mindestens einem hydroxygruppenhaltigen gesättigtem Copolyester, einem Phenol-Formaldehyd-Harz, einem Benzoguanamin-Formaldehyd-Harz und/oder einem blockierten Polyisocyanat, Katalysatoren, Lösemitteln und gegebenenfalls Hilfs- und Zusatzstoffen.

Verwendet werden die Beschichtungsmittel für die Außen- und Innenlackierung von Metallverpackungsgegenständen, wobei die Beschichtung frei von Polyvinylchlorid (PVC), Bisphenol A (BPA) sowie Bisphenol - A - Diglycidyl - Ether (BADGE), Bisphenol - F - Diglycidyl - Ether (BFDGE), Novolac - Glycidyl - Ether (NOGE) und deren Derivaten ist. Geeignet sind die Beschichtungsmittel für Walzlackierung von Metalltafeln oder -bändern insbesondere für stark verformte Metallverpackungen mit ausgezeichneter Haftung und Sterilisationsbeständigkeit speziell in sauren Medien wie Essigsäure und Milchsäure.

Metallverpackungsgegenstände für Nahrungsmittel und Getränke, wie Dosen, Tuben und Verschlüsse, werden üblicherweise mit einer organischen Beschichtung versehen (siehe Canmaking, The Technology of Metal Protection and Decoration" T. A. Turner, Blackie Academic & Professional, London, 1998, Seite 82; "Polymeric Materials Science and Engineering", Vol. 65, fall meeting 1991 New York, pages 277 - 278), um so einerseits das Metall gegen Korrosion zu schützen, die Weiterverarbeitung zu gewährleisten und andererseits das Füllgut zu schützen, so dass die Nahrungsmittelinhaltstoffe erhalten bleiben. Auch die Farbe, Textur und der Geschmack der Füllgüter dürfen über die Dauer der Haltbarkeit der Metallverpackungsgegenstände nicht verändert werden. Daher sind auch Übergänge des Metalls in das Füllgut durch die organische Beschichtung zu verhindern. Außerdem darf das Füllgut nicht durch die Lackschicht selbst und durch herausgelöste Teile der Lackschicht beeinflusst oder verändert werden ("Verpackung von Lebensmitteln" Rudolf Heiss, Springer Verlag, Berlin 1980, Seite 234 ff).

Die Beschichtungsmittel werden im Walzlackierverfahren entweder kontinuierlich auf sogenannten Coil - Linien oder diskontinuierlich auf sogenannten Tafellackier - Linien auf dünne Metalle wie Aluminium, Weißblech oder chromatiertern Stahl (TFS = tin free steel) aufgebracht und anschließen bei hohen Temperaturen zur Reaktion gebracht.

Die so hergestellten beschichteten Metalle werden anschließend zu den gewünschten Metallverpackungsgegenständen verformt durch Prozesse wie zum Beispiel Tiefziehen, Stanzen, Sicken und Bördeln. Diese mechanische Bearbeitung erfordert sehr hohe Flexibilität und ausgezeichnete Haftung der eingesetzten Beschichtungsmittel. Diese dürfen durch die Umformungsprozesse keine Veränderung der Schutzfunktion erfahren und müssen anschließend einwandfreie Haftung und intakte Oberflächen aufweisen.

Viele Metallverpackungsgegenstände werden nach Befüllung mit den Lebensmitteln Prozessen zur Haltbarmachung unterworfen. Dies sind zum Beispiel Pasteurisation oder Sterilisation; auch nach diesen thermischen Verfahren dürfen die Beschichtungsmittel keine Veränderung hinsichtlich Schutzfunktion, Haftung und Oberflächen aufweisen.
Heute werden Beschichtungsmittel speziell für den direkten Lebensmittelkontakt auf Basis von Epoxy - Phenol - Lacken verwendet, den sogenannten "Gold-Lacken" (siehe "Ullmannn's Encyclopedia of Industrial Chemistry", Vol. A 18, VCH Verlagsgesellschaft, Weinheim 1991, Seite 527).

Diese Lacke weisen gute Haftung auf und sind besonders gut geeignet für aggressive Füllgüter, insbesondere für saure Füllgüter. Werden besonders hohe Anforderungen an die Flexibilität der Beschichtungsmittel gestellt, verwendet man häufig PVC - Dispersionen, so genannte Organosole, die sich besonders durch gute Haftung und gute Tiefzieheigenschaften auszeichnen.

Allerdings enthalten sowohl die Epoxy - Phenol - Lacke als auch die Organosole BADGE (Bisphenol - A -Diglycidyl - Ether (2,2'-Bis(4-hydroxyphenyl)propan-bis(2,3-epoxypropyl)-ether)und/ oder BPA [Bisphenol - A = (2,2' - Bis ( 4-hydroxyphenyl) propan)]. Des weiteren werden auch BFDGE und NOGE verwendet. Die PVC- Organosole enthalten noch zusätzlich PVC.

Heute werden von der lebensmittelverpackenden Industrie sowie von Verbraucherverbänden beschichtete Metallverpackungsgegenstände gefordert, deren Lackierungen einerseits völlig frei von Epoxy-Verbindungen

(BADGE, BFDGE, NOGE und deren Derivate), Bisphenol A und PVC - und dessen Derivaten sind und andererseits vergleichbare Eigenschaften aufweisen wie die bisher verwendeten organischen Beschichtungen.

Bisphenol A steht im Verdacht Hormon ähnliche Wirkungen im menschlichen Organismus zu entfalten, daher die Forderung auf Verzicht ("Bisphenol A, A Known Endocrine Disruptor" WWF European Toxis Programme Report, April 2000, Seite 11). Die Verwendung von BADGE und BFDGE mit den jeweiligen Grenzwerten wird in Europa geregelt durch die Commission Directive 2002 / 16 / EC (siehe auch Council Directive 89/109/EBC, Directive 90/128/EEC), die Verwendung von NOGE ist für Beschichtungen mit direktem Lebensmittelkontakt seit Anfang 2003 untersagt.

Polyester in Verbindung mit Vemetzungspartnem wie Melaminharzen, Benzoguanaminharzen oder blockierten Polyisocyanaten sind in der Regel geeignet für die Außenlackierung von Metallverpackungsgegenständen. Sie sind flexibel und lassen sich ohne Probleme in Wasser sterilisieren und stellen so den Stand der Technik da.

(Protective Coatings, Clive H.Hare, Technology Publishing Company, Pittsburgh, USA, 1994, Seite 149; Tinplate and Modern Canmaking Technology, E. Morgan, Pergamon Press, Oxford, Seite 195 ff; Can making, The technology of metal protection and decoration, T. A. Turner, Blackie Academie Professional, London 1998, Seite 40 ff).

Mit Titandioxid pigmentierte Polyester-Benzoguanamin Lacke werden für die Innenbeschichtung von Dosen verwendet, wobei ausschließlich hochmolekulare Polyester (Mn > 12000) ausreichende Sterilisationsbeständigkeit in sauren Füllgütern bieten.

In USP 6,472,480 werden Polyester in Kombination mit Phenoxy-Gruppen enthaltende Harze oder Amino - Gruppen haltige Harze beschrieben; alle für den Verwendungszweck geeigneten Polyester müssen Naphthalindicarbonsäure enthalten sowie verzweigte Strukturen durch Verwendung trifunktioneller Monomeren wie TMA oder TMP aufweisen. Die Eignung dieser Beschichtungszusammensetzung speziell für Sterilisationen in sauren Medien ist fraglich.

Die DE 199 12 794 (Grace) beschreibt BADGE-freie Dosenbeschichtungen, enthält aber Bisphenol A als Komponente (siehe Polyester 5, Tabelle V, Vergleichsbeispiel B).

Kansai Paint Co. beschreibt Polyester Phenol Beschichtungen, die ebenfalls Bisphenol A enthalten. (JP 200220141, JP 200113147, JP 11315251).

GB 349464 (ICI) beschreibt die Verwendung von "Glyptalharzen" (Polyester aus Glycerin und Phthalsäureanhydrid) in Kombination mit Phenol-Formaldehyd-Resolen und Harnstoff-Formaldehyd-Harzen in wässrigen Emulsionen. Diese Beschichtungsmittel sind nicht für den Verwendungszweck "Metallverpackungslacke" geeignet.

Die in GB 1119091 (Schenectady) beschriebenen Polyester-Phenoplast Beschichtungen sind für Elektroisolierlacke (Drahtlacke) bestimmt.

Das in DE 22 28 288 (Stolllack) beschriebene wärmehärtbare Überzugsmittel beschreibt Phenol-Alkydharz -Lacke, die die Sulfurierungserscheinung vermeiden sollen. Der Anteil des Phenol-Formaldehyd-Harzes variiert zwischen mindestens 50 % bis 95 %, sinkt der Anteil des Phenols auf 30 % so ist der resultierende Lack klebrig. Das verwendete Bindemittel ist vom Alkyd-Typ, also einem ölhaltigem Polyester, und wird mit 10 bis 30 % verwendet. Die Haftung dieser Überzugsmittel nach mechanischer Verformung und Sterilisation wurde nicht beschrieben und bleibt fraglich.

DE 40 10 167 (BASF) beschreibt ein Verfahren zur Innenbeschichtung von Blechemballagen. Als Beschichtungsmittel werden ein carboxygruppenhaltiger Polyester und ein Phenolharz beschrieben. Nachteil dieser Erfindung sind die Verwendung eines oder mehrerer Epoxydharze zur Haftungsverbesserung sowie die Verwendung von thermoplastischen Harzen.

Die WO 95/23198 (DSM) beschreibt die Verwendung eines hydroxygruppenhaltigen Polyesters für die Innenbeschichtung von Dosen. Nachteil dieser beschriebenen Polyester ist, dass sie eine Glasübergangstemperatur von mindestens 40 °C aufweisen müssen und als Vernetzungspartner u. a. Epoxydharze verwendet werden.

Polyester - Phenol - Formaldehyd Kombinationen zeigen nach der Verformung so genannte Mikrorisse, zum Beispiel an den Ecken von Dosen oder an Schlagfaltproben. Diese Mikrorisse sind Fehlstellen in der Beschichtung und daher nicht geeignet für die Verwendung als Innenschutzlack von Metallverpackungen, da hier die Schutzfunktion der Beschichtung nachhaltig gestört ist. (Siehe Beispiel 8, Tabelle IX, Beschichtungsmittel C).

JP 2002302643A beschreibt die Verwendung von verzweigten Copolyestern für die Doseninnenbeschichtung. Der verwendete Vernetzer wird nicht beschrieben, erwähnt werden Gattungsbegriffe wie Aminoplastharze, Phenolharze, Melaminharze, polyfunktionelle Isocyanate, blockierte Isocyanate und polyfunktionelle Aziridinharze die als Vernetzer der Polyester in Frage kommen; dies stellt lediglich den allgemeinen Wissensstand zur Vernetzungsreaktion der Polyester dar (siehe: Lackharze; D. Stoye, W.Freitag; Seite 47; Carl Hanser Verlag, München 1996).

Keines der Patente beschreibt die Verwendung gesättigter hydroxygruppenhaltiger Copolyester in Kombination mit Phenol-Formaldehyd-Harzen, Benzoguanaminharzen und/oder blockierten Polyisocyanaten.

Aufgabe war es, eine Beschichtungszusammensetzung zu finden, die geeignet ist für Metallverpackungen aus Weißblech, Aluminium und TFS. Das Beschichtungsmittel sollte frei sein von Bisphenol - A, Bisphenol - A - Diglycidyl - Ether, Bisphenol - F - Diglycidyl - Ether, Novolac - Glycidyl - Ether und deren Derivaten sowie PVC und dessen Derivate. Die Beschichtungszusammensetzung sollte geeignet sein für die Innen- und Außenbeschichtung von 3-teiligen und tiefgezogenen Metallverpackungen und im Speziellen die bisher verwendeten Innenschutzlacke aus Epoxy - Phenol - Harzen ersetzen können, auch hinsichtlich Verformungseigenschaften (Schlagfalt - Test, Vierkantdose) und chemischer Beständigkeit (MEK-Festigkeit, Sterilisation).

Gegenstand der Erfindung sind lösemittelhaltige Beschichtungszusammensetzungen im Wesentlichen enthalten
A) 55 bis 75 Gew.-% mindestens eines hydroxylgruppenhaltigen Polyesters, wobei die eingesetzten Polyester eine Säurezahl von 0 bis 10 mg KOH/g, eine Hydroxyzahl von 3 bis 80 mg KOH/g, eine Glasübergangstemperatur von -20 bis + 50 °C und ein Molekulargewicht (Mn) von 2000 bis 20000 aufweisen und
B) 5 bis 13 Gew.-% eines Phenol - Formaldehyd Harzes,
   und
C) 0 bis 12 Gew.-% eines Benzoguanamin - Formaldehyd Harzes,
   und/oder
D) 0 bis 10 Gew.-% eines blockierten Polyisocyanates,
   und
E) 0,5 bis 2 Gew.-% eines Katalysators,
   und
F) 5 bis 30 Gew.-% mindestens eines Lösemittels,
wobei die Summe der Gewichtsangaben von Komponente A bis F 100 Gew.-% beträgt und mindestens die Komponente C) und/oder D) enthalten ist.

Es wurde gefunden, dass die Kombination der im Folgenden beschriebenen gesättigten hydroxygruppenhaltigen Copolyestern mit Phenol-Formaldehyd-Harzen, Benzoguanamin-Formaldehyd-Harzen und/oder blockierten Polyisocyanaten alle geforderten Kriterien erfüllen.

Die eingesetzten Copolyester basieren nur auf Rohstoffen, die für den direkten Lebensmittelkontakt zugelassen sind, insbesondere nach "§ 175.300 FDA" (die amerikanische Food and Drug Administration) und/oder der Europäischen Vorschrift "2002/72/ EG" (konsolidierte 90/128 / EG).

Die verwendeten Polyester konnten ohne Verwendung von Naphthalindicarbonsäure eingesetzt werden (siehe Polyester 1 bis 4), ebenso wurde gefunden, dass auch Polyester ohne verzweigte Struktur geeignet sind (siehe Polyester 2, 3, 4).

Überraschenderweise zeigen auch mittelmolekulare Copolyester hohe chemische Beständigkeiten nach der Sterilisation mit Essig- und Milchsäure.

Die verformten Metallbeschichtungen zeigen ausgezeichnete Sterilisationsbeständigkeiten, speziell in sauren Medien wie Essigsäure und Milchsäure, ohne dass Haftungseinbußen auftreten.

Im Speziellen weisen diese Beschichtungen nach mechanischer Verformung keine Mikrorisse auf.

### Polyester A)

Die erfindungswesentlichen Polyester A) werden nach bekannten Verfahren (siehe Dr. P. Oldring, Resins for Surface Coatings, Volume III, veröffentlich von Sita Technology, 203 Gardiness House, Broomhill Road, London SW 184JQ, England 1987) durch Kondensation hergestellt. Die eingesetzten Polyester bestehen aus einem Di- und/oder Polycarbonsäuregemisch und einem Di- oder Polyolgemisch. Sie sind von 55 bis 75 Gew.-%, bevorzugt von 56 bis 73 Gew.-% in der Beschichtungszusammensetzung enthalten.

Im einzelnen können übliche Carbonsäuren und deren veresterbare Derivate verwendet werden, wie z. B. Phthalsäure, Isophthalsäure, Terephthalsäure, 1,4-Cyclohexandicarbonsäure, Bernsteinsäure, Sebazinsäure, Methyltetra-, Metylhexahydrophthalsäure, Tetrahydrophthalsäure, Dodecandisäure, Adipinsäure, Azelainsäure, Naphthalindicarbonsäure, Pyromellitsäure, Dimerfettsäuren und/oder Trimellitsäure, deren Säureanhydride und/oder niedrige Alkylester wie z. B. Methylester.

Bevorzugt eingesetzt werden Isophthalsäure, Terephthalsäure, Adipinsäure, Sebazinsäure, Dimerfettsäure, Trimellitsäure, deren Säureanhydride und/oder veresterbare Derivate.

Als Alkoholkomponenten werden verwendet z. B. Ethylenglykol, 1,2- und/oder 1,3-Propandiol, Diethylen-, Dipropylen-,Triethylen-,Tetraethylenglykol, 1,4-Butandiol, 1,3-Butylethylpropandiol, 2-Metyl-1,3-propandiol, 1,5-Pentandiol, Cyclohexandimethanol, Glycerin, 1,6-Hexandiol, Neopentylglycol, Trimethylolethan, Trimethylolpropan" 1,4 Benzyldimethanol und -ethanol, 2,4-Dimethyl-2-ethylhexan-1,3-diol, Dicidol, bevorzugt eingesetzt werden 1,3-Methylpropandiol, NPG, Ethylenglycol, Trimethylolpropan.
Insbesonders sollten die Monomeren zugelassen sein nach "§ 175.300 FDA" und/oder der Europäischen Vorschrift" 2002/72/EG" genügen.

Die Copolyester sind **gekennzeichnet durch,**
a. eine Säurezahl zwischen 0 und 10 mg KOH/g, vorzugsweise 0 bis 5 mg KOH/g, insbesondere 0 bis 3 mg KOH/g,
b. eine Hydroxyzahl zwischen 3 bis 80 mg KOH/g, vorzugsweise zwischen 10 bis 50 mg KOH/g, insbesondere 15 bis 30 mg KOH/g,
c. eine Glasübergangstemperatur (Tg) zwischen -20 °C und +50 °C, vorzugsweise zwischen -10 °C und +40 °C,
d. eine lineare oder verzweigte Struktur, vorzugsweise linear oder schwach verzweigt, besonders bevorzugt linear,
e. ein Molekulargewicht (Mn) zwischen 2000 und 20000.

### Phenol-Formaldehyd-Harze B)

Die Phenol-Formaldehydharze B) werden in Mengen von 5 bis 13 Gew.-%, bevorzugt von 6 bis 12 Gew.-% eingesetzt.
Bevorzugt werden Phenolharze vom Resoltyp eingesetzt, wie zum Beispiel Phenol, Butylphenol, Xylenol- und Kresol- Formaldehyd Typen, wobei die speziell mit Butanol veretherten Typen besonders bevorzugt sind( zur Chemie, Herstellung und Verwendung der Phenolharze siehe "The Chemistry and Application of Phenolic Resins or Phenoplasts", Volume V, Part I, edited by Dr. Oldring; John Wiley and Sons / Sita Technology Ltd, London, 1997.)

Verwendete Phenolharze sind zum Beispiel: PHENODUR^{®} PR 285 (55 %), PR 612 (80 %), Vianova Resins, Mainz - Kastel, BAKELITE^{®} 6581LB(n-Butanol verethertes Kresolresol ), Bakelite, Iserlohn-Letmathe.

### Benzoguanamin-Formaldehyd-Harze C)

Die Benzoguanamin-Formaldehyd-Harze C) werden in Mengen von 0 bis 12 Gew.-%, bevorzugt von 2 bis 10 Gew.-% eingesetzt. Bevorzugt eingesetzt werden voll veretherte, speziell bevorzugt die Butanol- oder gemischt Methanol/Ethanol - veretherten, Benzoguanamine - Formaldehyd Harze (2,4 Diamino-6-phenyl 1,3,5 Triazin); (Zur Chemie, Herstellung und Verwendung siehe "The Chemistry and Application of Amino Crosslinking Agents or Aminoplasts", Volume V, Part II, Seite 21 ff., edited by Dr. Oldring, John Wiley and Sons/ Sita Technology Ltd, London 1998). Verwendet werden können u. a. die folgenden kommerziell erhältlichen Benzoguanamine: MAPRENAL® MF 980 (55 % in n-Butanol), 988 (80 % in n-Butanol), Vianova Resins, Mainz-Kastel; CYMEL® 1123 (98 %), Cytec, Neuss; LUWIPAL B017 (85 % in iso-Butanol) BASF, Ludwigshafen.

### Blockierte Polyisocyanate D)

Bevorzugt eingesetzt werden aliphatische und/oder cycloaliphatische blockierte Polyisocyanate, wie zum Beispiel HDI (Hexamefhylendiisocyanat), IPDI (Isophorondiisocyanat), H₁₂ MDI sowie deren Trimere. Insbesondere wurden die mit folgenden Blockierungsmittel hergestellten Polyisocyanate verwendet:
n- Butanonoxim, ε-Caprolactam, sekundäre Amine wie z. B VESTANAT^{®} B 1358 A (63 % in SN 100), VESTANAT^{®} EP B 1186 A (60 % in SN 100), VESTANAT^{®} EP B 1299 SV(53 % in SN 100), Degussa, Marl; DESMODUR BL 3175 (75 % in SN 100), Bayer, Leverkusen. Die blockierten Polyisocyanate sind in Mengen von 0 bis 10 Gew.-%, bevorzugt von 5 bis 9 Gew.-% in der erfindungsgemäßen Bcsehichtungszusammensetzung enthalten.
Es ist erfindungsgemäß möglich, dass entweder Komponente C) oder D) allein oder zusammen in der erfindungsgemäßen Beschichtungszusammensetzung enthalten sind und insbesondere bevorzugt sind, falls C) allein 5 bis 10 Gew.-%, falls D) allein 6 bis 9 Gew.-% sowie falls C) + D) Menge C: 2 bis 5 Gew.-% und Menge D: 5 bis 8 Gew.-%.

### Katalysatoren E)

Im Allgemeinen können saure Katalysatoren verwendet werden, besonders geeignet sind bei Tabelle I Säurekatalysatoren, wie zum Beispiel Phosphorsäurelösungen, Phosphorsäureesterlösungen wie ADDITOL^{®} XK 406 (Derivat der Phosphorsäure), Vianova Resins, Mainz - Kastel; Phosphorsäurelösung (85 % Phosphorsäure in Butylglykol 1 : 1). Im Allgemeinen können Zinnkatalysatoren verwendet werden, bevorzugt verwendet werden Dibutylzinndilaurat (= DBTL) in Tabelle II und III,zum Beispiel Metatin 712, Acima, Buchs, Schweiz.

### Lösemittel F)

Als Lösemittel können verwendet werden: aromatische Kohlenwasserstoffe (z. B. Solvent Naphtha 150, 200) Glykolether und Glykolester (z. B. Butylglykol (= BG), Methoxypropanol (=MP), Butylglykolacetat (= BGA), Methoxypropylacetat (= MPA)).

Auch Hilfs- und Zusatzstoffe können zusätzlich enthalten sein, wie z. B. Gleitmittel (Polyethylenwachs, PTFE-Wachs, Carnauba-Wachs), Füllstoffe (Titandioxid, Zinkoxid, Aluminium), Mattierungsmittel (gefällte Kieselsäure), Netz-und Dispergiermittel, Entschäumer (modifizierte Siloxane).

### Herstellung der Beschichtungsmittel:

Die Herstellung der Beschichtungsmittel erfolgt durch intensives Mischen der Komponenten bei Temperaturen von 20 bis 80 °C ("Lehrbuch der Lacktechnologie", Th. Brock, M. Groteklaes, P. Mischke, Hrsg. V.Zorll, Vincentz Verlag, Hannover, 1998, Seite 229 ff.). Nicht flüssige Komponenten werden vor dem Mischen zuerst in geeigneten Lösemitteln in Lösung gebracht, anschließend werden die restlichen Komponenten unter Rühren zugefügt.
Die Beschichtungsmittel weisen eine hohe Lösemittelbeständigkeit auf, zum Beispiel in Methyl-Ethyl-Keton (MEK) mit bis zu 100 Doppelhüben. Die erfindungsgemäßen Beschichtungsmittel sind hochflexibel und haftungsfest, was sich im Schlag-Falt-Test durch geringfügige Beschädigung ausdrückt (0 bis 13 mm Beschädigung).

Die erfindungsgemäßen Beschichtungsmittel werden für die Lackierung der Innen- und Außenseite von 3-teiligen und tiefgezogenen Metallverpackungsgegenständen wie Dosen, Deckeln und Verschlüssen verwendet. Die lackierten Metalle lassen sich mechanisch verformen, wie z. B. durch Tiefziehen, Sicken und Bördeln, und anschließend sterilisieren, speziell in Essigsäure und Milchsäure, ohne daß sich Haftungseinbußen zeigen. So lassen sich 4-Kant-Dosen stanzen mit 5, 10, 15 und 20 mm Radius der Ecken und auch Näpfchen ziehen mit einem Ziehverhältnis Durchmesser zur Höhe von 1 : 0,75 und 1 : 1,3, ohne das Haftverluste auftreten.

Die Beschichtungsmittel weisen auf den verwendeten metallischen Untergründen einen einwandfreien Verlauf auf und sind frei von Oberflächenstörungen, wie zum Beispiel Kratern und Benetzungsstörungen.

Die Beschichtungsmittel haben einen Feststoffgehalt von 35 % bis 45 %, bevorzugt von 37 % bis 42 %, wobei die Auslaufviskosität DIN 4mm (20 °C) von 95 sec bis 110 sec beträgt.

Die Erfindung wird durch die folgenden Beispiele näher erläutert.

### Beispiele

### (Die in den Tabellen angegebenen Prozentzahlen sind normiert auf 100)

### Polyesterbeispiele für Tabelle I, I/A, II, II/A, II/B und III:

Die mol-% der Carbonsäurekomponente und der Alkoholkomponente sind getrennt auf 100 mol-% normiert. Die Polyester sind gelöst in Solvent Naphtha 150 / Butylglykol (4/1).

### Polyester 1

Zusammensetzung 55 % Lösung: Terephthalsäure 40 %, Isophthalsäure 30 %, Sebazinsäure 30 % // Neopentylglykol 37 %, Methylpropandiol 60 %, Trimethylolpropan 3 %.
Viskosität: 4,0 Pas Säurezahl: 0,2 mgKOH/g, Hydroxylzahl: 25 mg KOH/g, Glasübergangstemperstur: 0 °C, Molmasse (theoretisch) 5800.

### Polyester 2

Zusammensetzung 55 % Lösung: Terephthalsäure 30, Isophthalsäure 40, Sebazinsäure 30// Neopentylglykol 100, Viskosität: 1,6 Pas, Säurezahl: 1,3 mg KOH/g, Hydroxylzahl: 21 mg KOH/g, Glasübergangstemperatur: 7 °C, Molmasse (theoretisch) 5800.

### Polyester 3

Zusammensetzung 55 % Lösung: Terephthalsäure 50, Isophthalsäure 20, Sebazinsäure 30// Methyl- propandiol 100, Viskosität: 2,5 Pas, Säurezahl: 0,7 mg KOH/g, Hydroxylzahl: 22 mg KOH/g, Glasübergangstemperatur: -9 °C, Molmasse (theoretisch) 5800.

### Polyester 4

Zusammensetzung 30 % Lösung in Solvent Naphtha 150: Terephthalsäure 30, Isophthalsäure 63, Dimerfettsäure 7 // Neopentylglykol 52, Ethylenglykol 48, Viskosität: 0,6 Pas, Säurezahl: 0,9 mg KOH/g, Hydroxylzahl: 5 mg KOH/g, Glasübergangstemperatur: 40 °C, Molmasse (theoretisch) 15000.

### Polyester 5 (Vergleich) Polyester Beispiel für Tabelle V:

(Nacharbeitung des Polyesters beschrieben im Patent Grace DE 199 12 794

Zusammensetzung Polyester 5, Polyester 50 % in Solvent Naphtha / BG (4 / 1) Terephthalsäure 26,1, Isophthalsäure 34,6, Adipinsäure 39,3 // Neopentylglykol 51,1, Ethylenglykol 43,0, Trimethylenpropan 5,9, Viskosität: 2,7 Pas, Säurezahl: 4 mg KOH/g, Hydroxylzahl: 34 mg KOH /g.

### Zusammensetzung der Beschichtungsmittel

### Beschichtungsmittel I: Polyester aus Beispiel 1, Phenolharz, Benzoguanamin, Katalysator, Lösemittel

**Tabelle I**

| | Gewichtsprozent der Lösungen |
|---|---|
| A) Polyester 1 | 57,3 % |
| B) Phenol-Formaldehyd Harz PHENODUR^{®} PR 285 | 6,3 % |
| C) Benzoguanamin Harz MAPRENAL^{®} MF 980 | 9,0 % |
| E) Katalysator ADDITOL^{®} XK 406 | 1,4 % |
| F) Lösemittel (MPA / BGA = 1/1) | 26 % |

**Tabelle I/A**

| | Gewichtsprozent der Lösungen |
|---|---|
| A) Polyester 3 | 57,3 % |
| B) Phenol-Formaldehyd Harz PHENODUR^{®} PR 285 | 6,3 % |
| C) Benzoguanamin Harz MAPRENAL^{®} MF 980 | 9,0 % |
| E) Katalysator ADDITOL^{®} XK 406 | 1,4% |
| F) Lösemittel (MPA / BGA = 1 / 1) | 26 % |

### Beschichtungsmittel II: Polyester aus Beispiel 2, Phenolharz, blockiertes Polyisocyanat, Katalysator, Lösemittel

**Tabelle II/A**

| | Gewichtsprozent der Lösungen |
|---|---|
| A) Polyester 2 | 56 % |
| B) Phenol-Formaldehyd Harz BAKELITE^{®} 6581 | 6,5 % |
| C) Blockiertes Polyisocyanat VESTANAT^{®} B 1358 | 8,6 % |
| E) Katalysator METATIN^{®} 712 | 0.6 % |
| F) Lösemittel (MPA / BGA = 1/1) | 28,3 % |

### Beschichtungsmittel II/1: Polyester aus Beispiel 3 und Beispiel 4, Phenolharz, blockiertes Polyisocyanat, Katalysator, Lösemittel

**Tabelle II / B**

| | | Gewichtsprozent der Lösungen |
|---|---|---|
| A) Polyester 3 | | 19,4 % |
| | Polyester 4 | 53,2 % |
| B) Phenol-Formaldehyd Harz PHENODUR^{®} PR 285 | | 12 % |
| D) Blockiertes Polyisocyanat VESTANAT^{®} B 1358 | | 7,5 % |
| E) Katalysator METATIN^{®} 712 | | 0,3 % |
| F) Lösemittel (MPA / BGA = 1/1) | | 7,6 % |

### Beschichtungsmittel III: Polyester aus Beispiel 2; Phenolharz, Benzoguanamin, blockiertes Polyisocyanat, Katalysator, Lösemittel

**Tabelle III**

| | Gewichtsprozent der Lösungen |
|---|---|
| A) Polyester 2 | 58 % |
| B) Phenol-Formaldehyd Harz PHENODUR^{®} PR 285 | 6,4 % |
| C) Benzoguanamin MAPRENAL^{®} MF 980 | 3,0 % |
| D) Blockiertes Polyisocyanat VESTANAT^{®} B 1358 | 5,6 % |
| E) Katalysator METATIN^{®} 712 | 0,6 % |
| F) Lösemittel (MPA / BGA =1/1) | 26,4 % |

### Vergleichsbeispiel A

Beschichtungsmittel A: Epoxyharz, Phenolharz, Katalysator, Lösemittel

**Tabelle IV**

| | Gewichtsprozent der Lösung |
|---|---|
| Epoxyharz EPIKOTE^{®} 1009 (35% Lösung MPA/BGA = 1/1) | 71,43 % |
| Phenol Harz PHENODUR^{®} PR 897 (53%) | 15,7 % |
| Katalysator (85 % H₃PO₄ in BG =1 : 1) | 0,4 % |
| Lösemittel (MPA / BG =1 / 1) | 12,47 % |

Vernetzungsverhältnis: Epoxyharz (Festharz) : Phenol-Formaldehyd Harz (Festharz) = 75 : 25 Epikote 1.009 (Shell, Eschborn), Phenodur PR 897 (Vianova Resins, Mainz - Kastel)

### Vergleichsbeispiel B

### Beschichtungsmittel B: Polyester 5, Phenolharz, Katalysator, Lösemittel (Polyester analog Beispiel 1 aus DE 199 12 794)

**Tabelle V**

| | Gewichtsprozent der Lösung |
|---|---|
| Polyester 5 | 70 % |
| Phenol-Formaldehyd Harz, PHENODUR^{®} PR 401 (72 %) | 12,1 % |
| Katalysator (C85% H₃PO₄ in Methoxypropanol = 4:1) | 1,0 % |
| Lösemittel Solvesso 100/MPA (1 : 1) | 16,9 % |

### Vergleichsbeispiel C

### Beschichtungsmittel C: Polyester 1 oder 2 oder 3, Phenolharz, Katalysator, Lösemittel

**Tabelle VI**

| | Gewichtsprozent der Lösung |
|---|---|
| Polyester 55 % Lösung Polyester 1/2/3 | 60,4 % |
| Phenol-Formaldehyd Harz Phenodur PR285 | 10,9 % |
| Katalysator Additol XK 406 | 1,5 % |
| Lösemittel (MPA/BGA =1:1 | 27,2 % |

| | |
|---|---|
| Abkürzungen: MPA = Methoxypropylacetat, BG = Butylglykol, BGA = Butylglykolacetat | |

### Beurteilung der Beschichtungen

Die Beschichtungsmittel werden mit ca. 5 bis 7g/m2 (Trockenfilmgewicht) auf Weißblech appliziert und bei den für can coating üblichen Temperaturen von 205 °C (pmt = peak metal temperatur) für 13 min (Ofenverweilzeit) eingebrannt. Die Vernetzung wird mittels Methyl-Ethyl-Keton (MEK) auf Vollständigkeit geprüft, dem Experten auch unter dem Begriff "MEK-Doppelhübe" geläufig. Als Test für die Flexibilität der Beschichtung wird ein dem Fachmann bekanntes Verfahren, der sogenannte "Schlagfalt - Test" durchgeführt. Als weitere Tests werden die beschichteten Bleche mit einer Stanze zu Vierkantdosen verformt. Diese Dosen werden in Wasser, 3 % Essigsäure und 2 % Milchsäure bei 129 °C 30 min sterilisiert. Nach der Sterilisation wird die Beschichtung hinsichtlich Haftung und Oberflächenbeschaffenheit an den vier unterschiedlichen Ecken beurteilt. Insbesondere wurde sowohl beim Schlagfalt-Test und der Vierkantdose das Auftreten von "Weißbruch" beurteilt.

**Tabelle VII**

| | Beispiel 1 Beschichtungsmittel I | Beispiel 2 Beschichtungsmittel II | Beispiel 3 Beschichtungsmittel I/A |
|---|---|---|---|
| MEK - Test (a.) | > 100 | 24 | 90 |
| Schlagfalt- Test in mm(b.) | 10 | 5 | 13 |
| Weißbruch | i.o. | i. o. | i. o. |
| Haftung Vierkantdose (c.) | 1/1/1/1 | 1/1/1/1 | 1/1/1/1 |
| Haftung Sterilis. H₂O(d.), Oberflächen (e), Wasseraufnahme (f.) | 4/1/1/1 1-2 | 1*/1/1/1 4 | 1/1/1/1 2 |
| Haftung, 3 % Essigsäure (d.), Oberfläche (e), Wasseraufnahme (f) | 4*/1*/1*/1* 2-3 | 1*/1*/1*/1* 3 | 1*/1*/1*/1* 3 |
| Haftung, 2 % Milchsäure (d.) Oberfläche (e), Wasseraufnahme (f.) | 4/3/1*/1* 4-5 | 1*/*/1/*/1* 3-4 | 1*/1*/1*/1* 3 |

**Tabelle VIII**

| | Beispiel 4 Beschichtungsmittel I | Beispiel 5 Vergleich Epoxy-Phenol Beschichtungsmittel A | Beispiel 6 Vergleich Poly ester-Phenol (Grace Patent) Beschich tungsmittel B |
|---|---|---|---|
| MEK - Test (a.) | 100 | 100 | 100 |
| Schlagfalt- Test in mm(b.) | 0 | 25 | 40 |
| Weißbruch | i.o. | i.o. | i.o. |
| Haftung Vierkantdose (c.) | 1/1/1/1 | 3/1/1/1 | 3/3/1/1 |
| Haftung, Sterilis. H₂O(d.), Oberfläche (e), Wasseraufnahme (f.) | 1/1/1/1 2 | 4/3*/1/1 1-2 | 4/3*/1/1 3 |
| Haftung, 3 % Essigsäure (d.), Oberfläche (e), Wasseraufnahme (f) | 1*/1*/1*/1* 3 | 4/4/1*/1* 2-3 | 4/4/3*/1* 4-5 |
| Haftung, 2% Milchsäure d.) Oberfläche (e), Wasseraufnahme (f.) | 1*/1*/1*/1* 4-5 | 4/4/1*/1* 3-4 | 4/4/4/3* 4-5 |

**Tabelle IX**

| | Beispiel 7 Beschichtungsmittel III | Beispiel 8 Beschichtungsmittel C |
|---|---|---|
| MEK - Test (a.) | > 100 | 5 / 1 / 2 |
| Schlagfalt- Test in mm(b.) | 0 | > 80 / 25 / > 80 |
| Weißbruch | i.o. | ja / ja / ja |
| Haftung Vierkantdose (c.) | 1/1/1/1 | - / - / - g. |
| Haftung, Sterilis. H₂O(d.), Oberfläche (e), Wasseraufnahme (f.) | 1/1/1/1 3 | - / - / - g. |
| Haftung, 3 % Essigsäure (d.), Oberfläche (e), Wasseraufnahme (f) | 1*/1*/1*/1* 4 | -/-/- g. |
| Haftung, 2 % Milchsäure (d.) Oberfläche (e), Wasseraufnahme (f.) | 1*/1*/1*/1* 5 | -/-/- g. |

| | | |
|---|---|---|
| a. Anzahl der Doppelhübe mit lkp Gewicht b. mm beschädigte Beschichtung c. vier Ecken mit 5/10/15/20 mm Radius: 1 = kein Haftungsverlust, 2 = 25 %, 3 = 50 %, 4 = 75 % Haftungsverlust, 0= totale Enthaftung. d. nach Sterilisation, Beurteilung wie unter c. e. Rauhigkeit der Oberfläche ***** = leicht angeraut f. Visueller Aspekt von 1 (keine Wasseraufnahme) bis 5 (starke Wasseraufnahme) g. nicht geprüft, da ungeeignet | | |

Das Vergleichsbeispiel 6 (Tabelle VIII), Beschichtungsmittel B als Vergleich zu den erfindungsgemäßen Beschichtungsmitteln zeigt deutlich, dass das Beschichtungsmittel B für den vorgesehenen Verwendungszweck nicht geeignet ist, da sowohl der Schlagfalttest (40 mm defekt) als auch die Vierkantdose (5 und 10 mm Ecke bereits vor der Sterilisation zu 50 % beschädigt) deutliche mechanische Schädigungen aufweisen. Nach der Sterilisation in sauren Medien ist die Haftung vollends verloren gegangen.

An Hand des Vergleichsbeispiel 8 (Tabelle IX) wird gezeigt, daß im Falle einer ausschließlich Phenolharz Vernetzung keine geeigneten Beschichtungsmittel zu erhalten sind.

Das Vergleichsbeispiel 5 (Tabelle VIII, Epoxy Phenol) zeigt die gute chemische Beständigkeit nach der Sterilisation in sauren Medien, es stellt den momentanen technischen Standard der Beschichtungen von Metallverpackungsgegenständen dar, der mindestens von alternativen Beschichtungsmitteln ohne Verwendung von Epoxyharzen erreicht werden sollte.

Die erfindungsgemäßen Beispiele Beschichtungsmittel 1, 2, 3 und 4 (Verzicht auf Epoxy und Bisphenol A sind dem Vergleichsbeispiel 5 hinsichtlich Flexibilität (Schlagfalttest und Vierkantdose) deutlich überlegen und bezüglich Haftung und Flexibilität nach der Sterilisation ebenbürtig.

## Patentansprüche

1. Beschichtungszusammensetzungen im Wesentlichen enthaltend
A) 55 bis 75 Gew.-% mindestens eines hydroxylgruppenhaltigen Polyesters, wobei die eingesetzten Polyester eine Säurezahl von 0 bis 10 mg KOH/g, eine Hydroxylzahl von 3 bis 80 mg KOH/g, eine Glasübergangstemperatur von -20 bis + 50 °C und ein Molekulargewicht (Mn) von 2000 bis 20000 aufweisen
und
B) 5 bis 13 Gew.-% eines Phenol - Formaldehyd Harzes,
und
C) 0 bis 12 Gew.-% eines Benzoguanamin - Formaldehyd Harzes,
und/oder
D) 0 bis 10 Gew.-% eines blockierten Polyisocyanates,
und
E) 0,5 bis 2 Gew.-% eines Katalysators,
und
F) 5 bis 30 Gew.-% mindestens eines Lösemittels,
wobei die Summe der Gewichtsangaben von Komponente A bis F 100 Gew.-% beträgt und mindestens die Komponente C) und/oder D) enthalten ist.

2. Beschichtungsmittel nach Anspruch 1,
**dadurch gekennzeichnet,**
**dass** die als Komponente A) eingesetzten Polyester Carbonsäuren ausgewählt aus Phthalsäure, Isophthalsäure, Terephthalsäure, 1,4-Cyclohexandicarbonsäure, Bernsteinsäure, Sebazinsäure, Methyltetra-Methylhexahydrophthalsäure, Tetrahydrophthalsäure, Dodecandisäure, Adipinsäure, Azelainsäure, Naphthalindicarbonsäure, Pyromellitsäure, Dimerfettsäuren und/oder Trimellitsäure, deren Säureanhydride und/oder veresterte Derivate enthalten.

3. Beschichtungsmittel nach mindestens einem der vorherigen Ansprüche,
**dadurch gekennzeichnet,**
**dass** die als Komponente A) eingesetzten Polyester Alkoholkomponenten ausgewählt aus Ethylenglykol, 1,2- und/oder 1,3-Propandiol, Diethylen-, Dipropylen-, Triethylen-, Tetraethylenglykol, 1,4-Butandiol, 1,3-Butylethylpropandiol, 2-Metyl-1,3-propandiol, 1,5-Pentandiol, Cyclohexandimethanol, Glycerin, 1,6-Hexandiol, Neopentylglycol, Trimethylolethan, Trimethylolpropan, 1,4 Benzyldimethanol und -ethanol, 2,4-Dimethl-2-ethylhexan-1,3-diol und/oder Dicidol enthalten.

4. Beschichtungsmittel nach mindestens einem der vorherigen Ansprüche,
**dadurch gekennzeichnet,**
**dass** als Komponente B) Phenolharze vorn Resoltyp, vorzugsweise die veretherten Xylenol- oder Kresol Phenol - Formaldehyd Harze enthalten sind.

5. Beschichtungsmittel nach mindestens einem der vorherigen Ansprüche,
**dadurch gekennzeichnet,**
**dass** der Polyester A) eine Säurezahl zwischen 0 bis 5 mg KOH/g, vorzugsweise 0 bis 3 mg KOH/g aufweist.

6. Beschichtungsmittel nach mindestens einem der vorherigen Ansprüche,
**dadurch gekennzeichnet,**
**dass** der Polyester A) eine Hydroxyzahl zwischen 10 bis 50 mg KOH/g, vorzugsweise 15 bis 30 mg KOH/g aufweist.

7. Beschichtungsmittel nach mindestens einem der vorherigen Ansprüche,
**dadurch gekennzeichnet,**
**dass** der Polyester A) eine Glasübergangstemperatur (Tg) zwischen -10 °C und +40 °C aufweist.

8. Beschichtungsmittel nach mindestens einem der vorherigen Ansprüche,
**dadurch gekennzeichnet,**
**dass** der Polyester A) eine lineare oder verzweigte Struktur, vorzugsweise linear oder schwach verzweigt, besonders bevorzugt linear aufweist.

9. Beschichtungsmittel nach mindestens einem der vorherigen Ansprüche,
**dadurch gekennzeichnet,**
**dass** als Komponente C) Benzoguanamin - Formaldehyd, speziell die mit Butanol oder Methyl/Ethyl voll veretherten Benzoguanamine enthalten sind.

10. Beschichtungsmittel nach mindestens einem der vorherigen Ansprüche,
**dadurch gekennzeichnet,**
**dass** als Komponente D) aliphatische, und/oder cycloaliphatische blockierte Polyisocyanate enthalten sind.

11. Beschichtungsmittel nach Anspruch 7,
**dadurch gekennzeichnet,**
**dass** Polyisocyanate auf Basis von Hexamethylendiisocyanat (HDI) und/oder Isophorondiisocyanat (IPDI) oder H₁₂MDI enthalten sind.

12. Beschichtungsmittel nach mindestens einem der vorherigen Ansprüche,
**dadurch gekennzeichnet,**
**dass** als Komponente E) Säuren oder metallorganische Verbindungen enthalten sind.

13. Beschichtungsmittel nach mindestens einem der vorherigen Ansprüche,
**dadurch gekennzeichnet,**
**dass** Phosphorsäure, Phosphorsäurederivate oder Zinnkatalysatoren enthalten sind.

14. Beschichtungsmittel nach mindestens einem der vorherigen Ansprüche,
**dadurch gekennzeichnet,**
**dass** als Komponente F) aromatische Kohlenwasserstoffe, Glykolether und/oder Glykolester enthalten sind.

15. Beschichtungsmittel nach mindestens einem der vorherigen Ansprüche,
**dadurch gekennzeichnet,**
**dass** Hilfs- und Zusatzstoffe enthalten sind.

16. Verfahren zur Herstellung von Beschichtungszusammensetzungen im Wesentlichen enthaltend
A) 55 bis 75 Gew.-% mindestens eines hydroxylgruppenhaltigen Polyesters, wobei die eingesetzten Polyester eine Säurezahl von 0 bis 10 mg KOH/g, eine Hydroxyzahl von 3 bis 80 mg KOH/g, eine Glasübergangstemperatur von -20 bis + 50 °C und ein Molekulargewicht (Mn) von 2000 bis 20000 aufweisen
und
B) 5 bis 13 Gew.-% eines Phenol - Formaldehyd Harzes,
und
C) 0 bis 12 Gew.-% eines Benzoguanamin - Formaldehyd Harzes,
und/oder
D) 0 bis 10 Gew.-% eines blockierten Polyisocyanates,
und
E) 0,5 bis 2 Gew.-% eines Katalysators,
und
F) 5 bis 30 Gew.-% mindestens eines Lösemittels,
durch intensives Mischen der Komponenten bei Temperaturen von +20 bis +80 **°**C.

17. Verwendung der Beschichtungszusammensetzungen nach mindestens einem der Ansprüche 1 bis 16 für die Lackierung von Bändern und Tafeln aus Metall.

18. Verwendung der Beschichtungszusammensetzungen nach mindestens einem der Ansprüche 1 bis 16 für die Außen - und Innenlackierung von Metallverpackungsgegenständen.

19. Verwendung der Beschichtungszusammensetzungen nach mindestens einem der Ansprüche 1 bis 16 für die Herstellung von Metallverpackungsgegenständen, die mechanisch verformt werden wie durch Tiefziehen, Bördeln, Stanzen und Sicken.

20. Beschichtete Gegenstände aus Metall, hergestellt mit einem Beschichtungsmittel nach mindestens einem der Ansprüche 1 bis 16.

21. Beschichtete Gegenstände nach Anspruch 20,
**dadurch gekennzeichnet,**
**dass** diese Verpackungsgegenstände sind.

22. Beschichtete Gegenstände nach Anspruch 21,
**dadurch gekennzeichnet,**
**dass** diese Dosen, Verschlüsse, Tuben oder Folien sind.

## Claims

1. Coating compositions comprising essentially
A) 55 to 75% by weight of at least one hydroxyl-containing polyester, the polyesters used having an acid value of from 0 to 10 mg of KOH/g, a hydroxyl number of from 3 to 80 mg of KOH/g, a glass transition temperature of from -20 to +50°C and a molecular weight (Mn) of from 2 000 to 20 000,
and
B) 5 to 13% by weight of a phenol-formaldehyde resin,
and
C) 0 to 12% by weight of a benzoguanamine-formaldehyde resin,
and/or
D) 0 to 10% by weight of a blocked polyisocyanate,
and
E) 0.5 to 2% by weight of a catalyst,
and
F) 5 to 30% by weight of at least one solvent,
where the sum of the weights of components A to F is 100% by weight and at least the component C) and/or D) is present.

2. Coating agents according to Claim 1,
**characterized in that,**
the polyesters used as component A) comprise carboxylic acids selected from phthalic acid, isophthalic acid, terephthalic acid, 1,4-cyclohexanedicarboxylic acid, succinic acid, sebacic acid, methyltetra-, methylhexahydrophthalic acid, tetrahydrophthalic acid, dodecanedioic acid, adipic acid, azelaic acid, naphthalenedicarboxylic acid, pyromellitic acid, dimer fatty acids and/or trimellitic acid, acid anhydrides and/or esterified derivatives thereof.

3. Coating agents according to at least one of the preceding clams,
**characterized in that**
the polyesters used as component A) contain alcohol components selected from ethylene glycol, 1,2- and/or 1,3-propanediol, diethylene glycol, dipropylene glycol, triethylene glycol, 1,4-butanediol, 1,3-butylethylpropanediol, 2-methyl-1,3-propanediol, 1,5-pentanediol, cyclohexanedimethanol, glycerol, 1,6-hexanediol, neopentyl glycol, trimethylolethane, trimethylolpropane, 1,4-benzyldimethanol and -ethanol, 2,4-dimethyl-2-ethylhexane-1,3-diol, and/or dicidol.

4. Coating agents according to at least one of the preceding claims,
**characterized in that**
as component B) phenol resins of the resol type are present, preferably the etherified xylenol- or cresol phenol-formaldehyde resins.

5. Coating agents according to at least one of the preceding claims,
**characterized in that**
the polyester A) has an acid value of between 0 and 5 mg of KOH/g, preferably from 0 to 3 mg of KOH/g.

6. Coating agents according to at least one of the preceding claims,
**characterized in that**
the polyester A) has a hydroxyl number of between 10 and 50 mg of KOH/g, preferably from 15 to 30 mg of KOH/g.

7. Coating agents according to at least one of the preceding claims,
**characterized in that**
the polyester A) has a glass transition temperature (Tg) of between -10°C and +40°C.

8. Coating agents according to at least one of the preceding claims,
**characterized in that**
the polyester A) has a linear or branched structure, preferably linear or slightly branched, particularly preferably linear,

9. Coating agents according to at least one of the preceding claims,
**characterized in that,**
as component C), benzoguanamine-formaldehyde, especially the benzoguanamines completely etherified with butanol or methyl/ethyl are present.

10. Coating agents according to at least one of the preceding claims,
**characterized in that,**
as component D), aliphatic and/or cycloaliphatic blocked polyisocyanates are present.

11. Coating agents according to Claim 7,
**characterized in that**
polyisocyanates based on hexamethylene diisocyanate (HDI) and/or isophorone diisocyanate (IPDI) or H₁₂MDI are present.

12. Coating agents according to at least one of the preceding claims,
**characterized in that**,
as component E), acids or organometallic compounds are present.

13. Coating agents according to at least one of the preceding claims,
**characterized in that**
phosphoric acid, phosphoric acid derivatives or tin catalysts are present.

14. Coating agents according to at least one of the preceding claims,
**characterized in that**,
as component F), aromatic hydrocarbons, glycol ethers and/or glycol esters are present.

15. Coating agents according to at least one of the preceding claims,
**characterized in that**
aids and additives are present.

16. Process for producing coating compositions essentially comprising
A) 55 to 75% by weight of at least one hydroxyl-containing polyester, the polyesters used having an acid value of from 0 to 10 mg of KOH/g, a hydroxyl number of from 3 to 80 mg of KOH/g, a glass transition temperature of from -20 to +50°C and a molecular weight (Mn) of from 2 000 to 20 000,
and
B) 5 to 13% by weight of a phenol-formaldehyde resin,
and
C) 0 to 12% by weight of a benzoguanamine-formaldehyde resin,
and/or
D) 0 to 10% by weight of a blocked polyisocyanate,
and
E) 0.5 to 2% by weight of a catalyst,
and
F) 5 to 30% by weight of at least one solvent,
by intensive mixing of the components at temperatures of from +20 to +80°C.

17. Use of the coating compositions according to at least one of Claims 1 to 16 for lacquering metal coils and sheets.

18. Use of the coating compositions according to at least one of Claims 1 to 16 for the exterior and interior lacquering of metal packaging articles.

19. Use of the coating compositions according to at least one of Claims 1 to 16 for producing metal packaging articles which are mechanically shaped such as by deep-drawing, flanging, stamping and creasing.

20. Coated metal articles produced using a coating agent according to at least one of Claims 1 to 16.

21. Coated articles according to Claim 20,
**characterized in that**
they are packaging articles.

22. Coated articles according to Claim 21,
**characterized in that**
they are cans, closures, tubes or foils.

## Revendications

1. Compositions de revêtement contenant pour l'essentiel
A) de 55 à 75 % en poids d'au moins un polyester contenant des groupements hydroxyles, les polyesters utilisés présentant un indice d'acidité de 0 à 10 mg de KOH/g, un indice hydroxyle de 3 à 80 mg de KOH/g, une température de transition vitreuse de -20 à + 50°C et un poids moléculaire (Mn) de 2 000 à 20 000 et
B) de 5 à 13 % en poids d'une résine phénol-formaldéhyde et
C) de 0 à 12 % en poids d'une résine benzoguanamine-formaldéhyde, et/ou
D) de 0 à 10 % en poids d'un polyisocyanate bloqué et
E) de 0,5 à 2 % en poids d'un catalyseur et
F) de 5 à 30 % en poids d'au moins un solvant
la somme des indications en poids de composants A à F étant de 100 % en poids et au moins les composants C) et/ou D) étant inclus.

2. Composition de revêtement selon la revendication 1, **caractérisée en ce que** les polyesters utilisés en tant que composant A) contiennent des acides carboxyliques sélectionnés parmi l'acide phtalique, l'acide isophtalique, l'acide téréphtalique, l'acide 1,4-cyclohexane-dicarboxylique, l'acide succinique, l'acide sébacique, l'acide méthyltétra-méthylhexahydrophtalique, l'acide tétrahydrophtalique, l'acide dodécanoïque, l'acide adipique, l'acide azélaïque, l'acide naphtalène-dicarboxylique, l'acide pyromellitique, des acides gras dimères et/ou l'acide trimellitique, leurs anhydrides d'acides et/ou leurs dérivés estérifiés.

3. Composition de revêtement selon l'une quelconque des revendications précédentes, **caractérisée en ce que** les polyesters utilisés en tant que composant A) contiennent des composants d'alcools sélectionnés parmi l'éthylèneglycol, les 1,2-et/ou 1,3-propanediols, les diéthylène-, dipropylène-, triéthylène-, tétraéthylène-glycols, le 1,4-butanediol, le 1,3-butyéthylpropanediol, le 2-méthyl-1,3-propanediol, le 1,5-pentanediol, le cyclohexanediméthanol, la glycérine, le 1,6-hexanediol, le néopentylglycol, le triméthyloléthane, le triméthylolpropane, le 1,4-benzyldiméthanol et le 1,4-benzyldiéthanol, le 2,4-diméthyl-2-éthylhexane-1,3-diol et/ou le dicidol.

4. Composition de revêtement selon l'une quelconque des revendications précédentes, **caractérisée en ce qu'**y sont contenues, en tant que composant B), des résines phénoliques du type résol, de préférence, les résines xylénol- ou crésol- phénol-formaldéhyde éthérées.

5. Composition de revêtement selon l'une quelconque des revendications précédentes, **caractérisée en ce que** le polyester A) présente un indice d'acidité compris entre 0 et 5 mg de KOH/g, de préférence, de 0 à 3 mg de KOH/g.

6. Composition de revêtement selon l'une quelconque des revendications précédentes, **caractérisée en ce que** le polyester A) présente un indice hydroxyle compris entre 10 et 50 mg de KOH/g, de préférence, de 15 à 30 mg de KOH/g.

7. Composition de revêtement selon l'une quelconque des revendications précédentes, **caractérisée en ce que** le polyester A) présente une température de transition vitreuse (Tg) comprise entre -10°C et +40°C.

8. Composition de revêtement selon l'une quelconque des revendications précédentes, **caractérisée en ce que** le polyester A présente une structure linéaire ou ramifiée, de préférence, linéaire ou faiblement ramifiée, en particulier, de préférence, linéaire.

9. Composition de revêtement selon l'une quelconque des revendications précédentes, **caractérisée en ce qu'**y sont contenus, en tant que composant C), un benzoguanamine-formaldéhyde, tout spécialement les benzoguanamines complètement éthérées au butanol ou aux radicaux méthyl/éthyl.

10. Composition de revêtement selon l'une quelconque des revendications précédentes, **caractérisée en ce qu'**y sont contenus, en tant que composant D), des polyisocyanates bloqués aliphatiques et/ou cycloaliphatiques.

11. Composition de revêtement selon la revendication 7, **caractérisée en ce qu'**y sont contenus des polyisocyanates à base de diisocyanate d'hexaméthylène (HDI) et/ou à base de diisocyanate d'isophorone (IPDI) ou à base de H₁₂MDI.

12. Composition de revêtement selon l'une quelconque des revendications précédentes, **caractérisée en ce qu'**y sont contenus, en tant que composant E), des acides ou des composés organométalliques.

13. Composition de revêtement selon l'une quelconque des revendications précédentes, **caractérisée en ce qu'**y sont contenus des acides phosphoriques, des dérivés d'acide phosphorique ou des catalyseurs à l'étain.

14. Composition de revêtement selon l'une quelconque des revendications précédentes, **caractérisée en ce qu'**y sont contenus, en tant que composant F), des hydrocarbures aromatiques, des éthers glycoliques et/ou des esters glycoliques.

15. Composition de revêtement selon l'une quelconque des revendications précédentes, **caractérisée en ce qu'**y sont contenus des additifs et des adjuvants.

16. Procédé en vue de la fabrication de compositions de revêtement contenant pour l'essentiel
A) de 55 à 75 % en poids d'au moins un polyester contenant des groupements hydroxyles, les polyesters utilisés présentant un indice d'acidité de 0 à 10 mg de KOH/g, un indice hydroxyle de 3 à 80 mg de KOH/g, une température de transition vitreuse de -20 à + 50°C et un poids moléculaire (Mn) de 2 000 à 20 000 et
B) de 5 à 13 % en poids d'une résine phénol-formaldéhyde et
C) de 0 à 12 % en poids d'une résine benzoguanamine-formaldéhyde, et/ou
D) de 0 à 10 % en poids d'un polyisocyanate bloqué et
E) de 0,5 à 2 % en poids d'un catalyseur et
F) de 5 à 30 % en poids d'au moins un solvant,
laquelle fabrication est effectuée par l'intermédiaire d'un mélange intensif des composants à des températures de +20 à +80°C.

17. Utilisation des compositions de revêtement selon l'une quelconque des revendications 1 à 16 en vue du vernissage de bandes et de panneaux en métal.

18. Utilisation des compositions de revêtement selon l'une quelconque des revendications 1 à 16 en vue du vernissage externe et interne d'articles d'empaquetages métalliques.

19. Utilisation des compositions de revêtement selon au moins l'une quelconque des revendications 1 à 16 en vue de la fabrication d'articles d'emballage métalliques, qui sont déformés par voie mécanique comme par emboutissage profond, par sertissage, par estampage et par moulurage.

20. Articles revêtus en métal, fabriqués à l'aide d'une composition de revêtement selon au moins l'une quelconque des revendications 1 à 16.

21. Articles revêtus selon la revendication 20, **caractérisés en ce que** ceux-ci sont des articles d'emballage.

22. Articles revêtus selon la revendication 21, **caractérisé en ce que** ceux-ci sont des boîtes, des fermetures, des tubes ou des feuilles.
